# EUROPÄISCHE PATENTSCHRIFT

(11) **EP 0 695 982 B1**
(45) Veröffentlichungstag und Bekanntmachung des Hinweises auf die Patenterteilung: **10.05.2000**
(21) Anmeldenummer: 95110862.0
(22) Anmeldetag: 12.07.1995
(51) Int. Cl.: G05B 19/042

(54) **Hybrid-Steuereinrichtung insbesondere für Waschmaschinen**
Hybrid control particularly for washing machines
Commande hybride en particulier pour des machines à laver

(30) Priorität: 21.07.1994 DE 4425757
(43) Veröffentlichungstag der Anmeldung: 07.02.1996
(73) Patentinhaber: AKO-Werke GmbH & Co. KG, 88239 Wangen im Allgäu (DE)
(72) Erfinder: Siebachmeyer, Fritz, Ing.grad., D-88099 Neukirch (DE)
(74) Vertreter: Gaiser, Hartmut, Dipl.-Ing.

(56) Entgegenhaltungen:
- EP-A- 0 210 884
- EP-A- 0 367 673
- EP-A- 0 542 599
- DE-A- 2 716 240

## Beschreibung

Die Erfindung betrifft eine Hybrid-Steuereinrichtung, insbesondere für Waschmaschinen, Wäschetrockner, mit den Merkmalen des Oberbegriffs des Patentanspruchs 1.

In der DE 20 40 464 C3 ist ein elektromechanisches Programmschaltwerk mit einer Programmtrommel und einer Reversiertrommel beschrieben. Zum Antrieb dieser beiden Trommeln ist ein Schrittschaltantrieb vorgesehen, der von einem Timermotor angetrieben ist. Während des Programmablaufs läuft der Timermotor ständig und in gleicher Drehrichtung. Bei der DE 20 40 464 C3 bestimmen die Umfangslängen der Nocken der Reversiertrommel die Dauer des Rechtslaufs bzw. des Linkslaufs der Wäschetrommel. Die Dauer der Programmschritte ist von den Nocken der Programmtrommel und einer Zeitdehneinrichtung bestimmt.

Bei einer derartigen Einrichtung sind die Möglichkeiten für unterschiedliche Waschvorgänge begrenzt, da der mechanische Bauaufwand des Programmschaltwerks in Grenzen gehalten werden muß.

In der EP-A-0 542 599 ist eine Hybrid-Steuereinrichtung der eingangs genannten Art beschrieben. Der Timermotor treibt ohne Schrittschaltantrieb einen Nockenscheibenblock kontinuierlich an. Eine Differenzierung des Nockenscheibenblocks in Programmtrommel und Reversiertrommel ist nicht vorgesehen. Es ist anzunehmen, daß alle Nockenscheiben gleichzeitig angetrieben werden. Eine Nockenscheibe gibt eine Zeitbasis vor, die durch Anhalten des Timermotors an verschiedenen Programmstellen verlängert werden kann. Eine weitere Nockenscheibe hat ein repetierendes Niveau-Muster für Rechtsdrehen, Stoppen und Linksdrehen des Wäschetrommelmotors.

In der DE 33 03 992 A1 ist ein Programmschaltwerk für Waschmaschinen in Hybridtechnik beschrieben. In einer zentralen elektronischen Steuereinheit (Mikroprozessor) sind die Programmdaten für Programmzeiten, Reversierzyklen sowie die Motordrehzahlregelung vorgegeben. Die elektronische Steuereinheit steht mit einem elektromechanischen Schaltwerk in Verbindung, welches Maschinenaggregate, wie Heizung, Motor und Pumpe schaltet.

Aufgabe der Erfindung ist es, bei einem in der Praxis bewährten elektromechanischen Programmschaltwerk die möglichen Schrittzeiten und Programmabläufe zu vervielfältigen.

Erfindungsgemäß ist obige Aufgabe durch die Merkmale des kennzeichnenden Teils des Patentanspruchs 1 gelöst.

Die Nocken am Umfang der Reversiertrommel geben zyklisch immer nur vor, ob der Wäschetrommelmotor potentiell rechtslaufen, linkslaufen oder stillstehen soll. Die Dauer des Rechtslaufs, Linkslaufs oder Stillstands wird nicht von der Reversiertrommel, sondern von der Steuerelektronik dadurch bestimmt, daß der zum Fortschalten der Reversiertrommel und der Programmtrommel vorgesehene Schrittschaltantrieb bzw. Timermotor für die jeweils programmschrittgerechte Zeitdauer abgeschaltet bzw. wirkungslos bleibt, so daß die Reversiertrommel dementsprechend lang bzw. kurz in der Stellung Rechtslauf oder Linkslauf oder Stillstand verbleibt. Somit beschränkt der geometrische Umfang der Reversiertrommel die möglichen Dauern für Rechtslauf, Linkslauf, Stillstand des Wäschetrommelmotors, also die mit der Steuereinrichtung möglichen Waschprogramme nicht. Es sind auf dem Umfang der Reversiertrommel eine große Anzahl von Reversierzyklen unterzubringen. Durch diesen Zyklus ist auf der Reversiertrommel die höchste Dichte von Schaltfunktionen erreicht. Es ist jedoch im Bedarfsfalle auch möglich, die Zyklusfunktionen zu erweitern. Beispielsweise sind Zyklen möglich, bei denen sich die Funktion Rechtslauf(R), Stillstand(S) und/oder Linkslauf (L) unmittelbar nacheinander wiederholen. Solche Zyklen sind beispielsweise R,S,S,L,S,S oder R,S,L,L,S,S o.ä. Durch eine solche Gestaltung der Zyklen sind unterschiedliche Mindest-Schaltschrittzeiten auf elektromechanischem Wege vorgebbar.

Die Dauern der Funktionen Rechtslauf, Linkslauf, Stillstand für die vorgesehenen Waschprogramme sind nach den Vorschriften des Waschmaschinenherstellers in einem Speicher der Steuerelektronik abgelegt. Das im Gesamt-Programmablauf jeweils nötige Waschprogramm wird von der Programmtrommel aus der Steuerelektronik abgerufen.

Die Programmtrommel schaltet jeweils um einen Programmschritt weiter, wenn die Zyklusfunktionen mehrmals (Zyklussummendauer), beispielsweise sechsmal, durchlaufen sind. Dadurch bestimmen die Dauern der Zyklusfunktionen nicht nur den Waschrhythmus, sondern auch die Schrittzeit (Zyklussummendauer) der Programmtrommel.

In Ausgestaltung der Erfindung liegen an der Steuerelektronik ein oder mehrere Zustandssensoren und/ oder Wahlschalter und die Steuerelektronik stellt die Stoppdauern in Abhängigkeit von den Meßwerten der Zustandssensoren bzw. der Stellung der Wahlschalter ein. Dadurch läßt sich der Programmablauf in vielfältiger Weise beeinflussen.

Weitere vorteilhafte Ausgestaltungen der Erfindung ergeben sich aus den weiteren Unteransprüchen und der folgenden Beschreibung. In der Zeichnung zeigen:

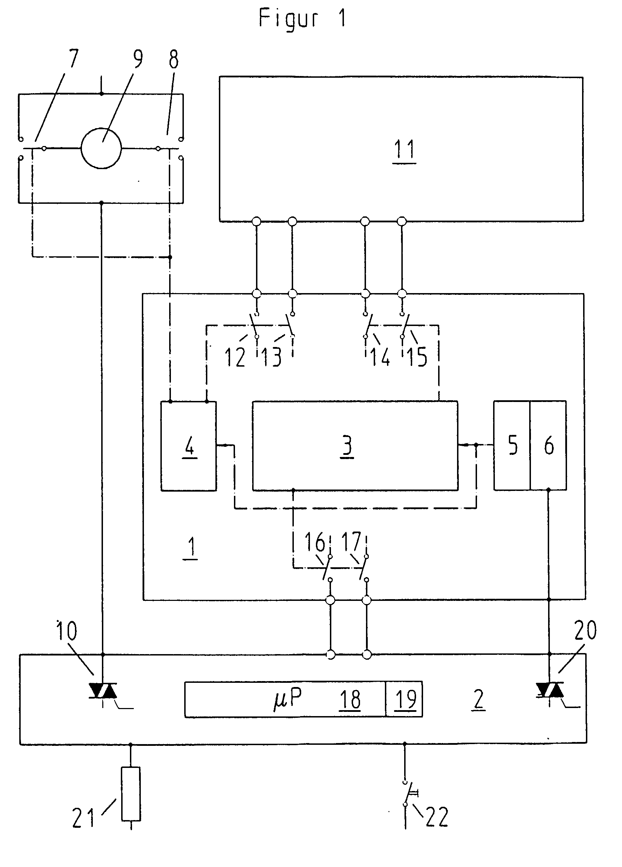

- Figur 1: ein Blockschaltbild der Steuereinrichtung und
- Figur 2: eine Tabelle mit mehreren Programmbeispielen.

Eine Steuereinrichtung einer Waschmaschine weist ein elektromechanisches Programmschaltwerk (1) und eine digitale Steuerelektronik(2) auf. Das Programmschaltwerk (1) arbeitet mit einer Programmtrommel (3) und mit einer Reversiertrommel (4). Beide Trommeln sind von einem gemeinsamen Schrittschaltantrieb (5), beispielsweise Klinkenantrieb, antreibbar, welcher seinerseits von einem Timermotor (6) angetrieben ist.

Nocken der Reversiertrommel (4) betätigen Wendekontakte (7,8) eines Waschmaschinenmotors (9), der über einen Triac (10) der Steuerelektronik(2) schaltbar und drehzahlregelbar ist. Je nach Stellung der Wendekontakte (7,8) läuft der Motor(9) rechts oder links oder steht still. Weitere Aggregate der Waschmaschine, wie Wassereinlaßventil, Laugenpumpe, Niveauregler und Heizung sind durch den Block(11) dargestellt.

Diese Aggregate sind von Schaltkontakten(12,13), die zusätzlichen Nockenscheiben der Reversiertrommel (4) zugeordnet sind, und/oder von Schaltkontakten (14,15) der Programmtrommel (3) schaltbar. Mittels der Programmtrommel (3) sind außerdem Kodierungskontakte (16,17) schaltbar, die einen der Programmtrommelstellung entsprechenden Steuerbefehl an die Steuerelektronik (2) geben.

Die Steuerelektronik(2) arbeitet mit einem Mikroprozessor (18) und einem Speicher(19), in dem die dem Steuerbefehl zugeordneten Stoppdauern abgelegt sind. Die Steuerelektronik(2) schaltet über einen weiteren Triac(20) den Timermotor(6) ein bzw. aus. Anstelle der direkten Steuerung des Timermotors(6) durch die Steuerelektronik(2) könnte auch eine von der Steuerelektronik(2) gesteuerte Kupplung vorgesehen sein. Der Timermotor(6) könnte in diesem Fall ohne Stoppen durchlaufen.

An die Steuerelektronik(2) sind Sensoren(21), beispielsweise für die Temperatur der Lauge in der nicht näher dargestellten Wäschetrommel, die Drehzahl des Waschmaschinenmotors(9) oder den Füllstand der Wäschetrommel oder die Schaumbildung in der Wäschetrommel angeschlossen. Außerdem liegen an der Steuerelektronik(2) Wahlschalter(22), mit denen der Benutzer ein oder mehrere Parameter des Waschvorgangs einschalten kann. Die eigentliche Programmauswahl erfolgt durch Drehen der Programmtrommel(3) in die gewünschte Ausgangsstellung.

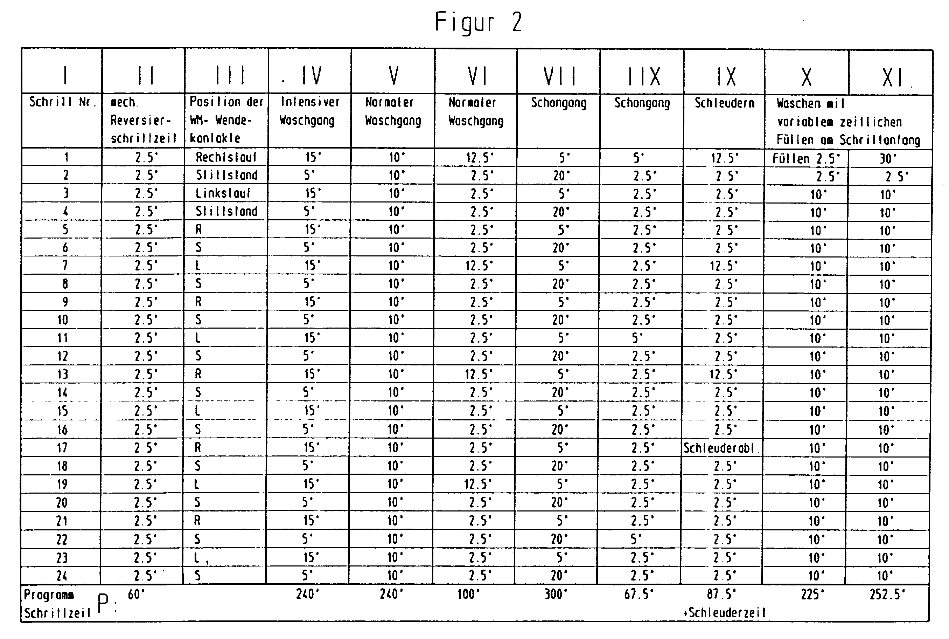

In Spalte I der Tabelle (Figur 2) sind 24 Schaltschritte der Reversiertrommel(4) gezeigt. Diese sind durch Nocken am Umfang der Reversiertrommel(4) verkörpert und können den gesamten Umfang oder ein Umfangssegment der Reversiertrommel(4) einnehmen. In Spalte II ist die im Beispielsfalle kleinste Schaltschrittzeit (2,5s) der Reversiertrommel(4) angegeben. Diese minimale Schaltschrittzeit ist durch den mechanischen Schrittschaltantrieb(5) bedingt.

Spalte III zeigt die Positionen der Wendekontakte(7,8) in den einzelnen Schaltschritten. In den 24 Schritten werden die Wendekontakte(7,8) zyklisch so geschaltet, daß der Waschmaschinenmotor(9) in Rechtslauf(R), Stillstand(S), Linkslauf(L), Stillstand(S) geschaltet wird. In den 24 Schaltschritten findet also dieser Zyklus sechsmal statt.

Nach jedem Durchlauf der 24 Schaltschritte wird die Programmtrommel(3) um einen Schritt weitergeschaltet. Die sieh dabei ergebende, der Zyklussummendauer entsprechende Programmschrittzeit(P) ist in der untersten Zeile P: der Tabelle jeweils dargestellt. Läuft beispielsweise die Reversiertrommel(4) in der schnellstmöglichen Zeit nach Spalte II ab, dann ergibt sich eine Programmschrittzeit von 60 s.

In der Spalte IV ist ein Beispiel für einen intensiven Waschgang dargestellt. In diesem Fall hat die Steuerelektronik(2) von der Programmtrommel(3) den Befehl erhalten, den Timermotor(6) in Rechtslaufposition und in Linkslaufposition der Wendekontakte(7,8) jeweils für 12,5 s zu stoppen - zuzüglich der Schaltschrittzeit von 2,5 s ergeben sich also jeweils 15 s Rechtslauf bzw. Linkslauf - und in den Stillstandspositionen den Timermotor(6) für jeweils 2,5 s zu stoppen - zuzüglich der Schaltschrittzeit von 2,5 s ergeben sich also 5 s Stillstand - und erst jeweils danach die Reversiertrommel(4) um einen Schritt weiterzuschalten. Der Waschmaschinenmotor(9) läuft also in jedem Zyklus 15 s im Rechtslauf, steht 5 s still, läuft 15 s im Linkslauf und steht vor dem nächsten Rechtslauf wieder 5 s still. Insgesamt ergibt sich daraus eine Einschaltdauer des Waschmaschinenmotors(9) von 75 %. Die Programmschrittzeit(P) beträgt 240 s.

Die Spalte V zeigt die Reversierschaltschritte eines normalen Waschgangs. Jeweils für 10 s Findet im Zyklus Rechtslauf, Stillstand, Linkslauf, Stillstand statt. Die Einschaltdauer des Waschmaschinenmotors(9) beträgt also 50 %. Die Programmschrittzeit, d.h. die Dauer dieses Waschvorgangs, beträgt auch hier wieder 240 s.

In Spalte VI beträgt die Stoppdauer im 1. Schritt 12,5 s und im 7. und 13. und 19. Schritt ebenfalls 12,5 s. In den dazwischenliegenden Schritten hat die Schrittzeit der Reversiertrommel(4) den kleinsten Wert, nämlich 2,5 s. Im 1. Schritt und im 13. Schritt findet Rechtslauf statt. Im 7. Schritt und im 19. Schritt Findet Linkslauf statt. Zwischen diesen Schritten liegen jeweils 5 x 2,5 s = 12,5 s. Es liegt also auch hier ein normaler Waschvorgang mit 50 % Einschaltdauer vor, wobei Rechtslauf und Linkslauf gleich lange dauern. Bei den kürzesten Schrittzeiten von 2,5 s wird der Triac(10) gesperrt und der Waschmaschinenmotor(9) weder im Linkslauf noch im Rechtslauf angesteuert.

Beim Beispiel nach Spalte VI beträgt die Programmschrittzeit(P) 100 s.

In Spalte VII ist ein Schorgang gezeigt. In diesem Fall findet in jedem Zyklus jeweils für 5 s Rechtslauf bzw. Linkslauf statt. Dazwischen liegen Stoppdauern von 20 s. Es ist also eine Einschaltdauer von 20 % gegeben. Die Programmschrittzeit(P) beträgt 300 s.

In Spalte IIX ist ebenfalls ein Schongang mit 20 % Einschaltdauer gezeigt. Die Programmschrittzeit(P) ist hier wesentlich kürzer. Sie beträgt 67,5 s.

Ersichtlich sind nach dem beschriebenen Schema auch zahlreiche andere Waschgänge einstellbar. Beispielsweise ist es möglich, ein Einweichprogramm mit 10 % Einschaltdauer und einer Programmschrittzeit(P) von 12 min. zu verwirklichen. Hierfür kann in jedem Zyklus vorliegen:
Rechtslauf 6 s, Stillstand 54 s, Linkslauf 6 s, Stillstand 54 s.

In der Spalte IX ist ein Schleudergang vorgestellt. Im Schaltschritt 1 erfolgt Rechtslauf, im Schaltschritt 7 erfolgt Linkslauf und im Schaltschritt 13 erfolgt Rechtslauf für jeweils 2,5 s. Diese Bewegungen des Waschmaschinenmotors bzw. der Wäschetrommel dienen der Verbesserung der Entwässerung der Wäshe vor dem Schleudern. Während dieser Zeit (Schritte 1 bis 16) wird über einen der Schaltkontakte der Reversiertrommel(4) oder der Programmtrommel(3) Wasser abgepumpt. Im Schaltschritt 17 stehen die Wendekontakte(7,8) wieder auf Rechtslauf. Der Timermotor(6) stoppt und zwar für eine Zeit, bis der Waschmaschinenmotor(9) auf seine Soll-Schleuderdrehzahl hochgelaufen ist, was die Steuerelektronik(2) über den Sensor(21) erfaßt, und für eine im Speicher(19) abgelegte Zeit, in der das Schleudern erfolgt. Danach läuft der Timermotor(6) wieder an und durchfährt die Schritte 18 bis 24 ohne weiteren Lauf des Waschmaschinenmotors(9). Die Programmschrittzeit(P) beträgt hierbei 67,5 s zuzüglich der Schleuderzeit.

In den Spalten X, XI sind Waschprogramme mit zeitlich verschiedener Fülldauer im Reversierschritt 1 gezeigt. Nach Spalte X wird im Schaltschritt 1 über den Schaltkontakt(12,13) das Wassereinlaßventil für 2,5 s eingeschaltet, so daß Wasser in die Wäschetrommel strömt.

Nach Spalte XI wird das Ventil für 30 s geschaltet, so daß in der Wäschetrommel ein höherer Wasser-Füllstand als im Fall der Spalte X erreicht wird. Dies geschieht durch eine entsprechende Gestaltung der dem Schaltkontakt(12 bzw. 13) zugeordneten Nockenscheibe der Reversiertrommel (4). Die Nockenscheibe ist so gestaltet, daß dieser Schaltkontakt(12 bzw. 13) nur im 1. Schritt geschlossen ist. Während der Einfüllphase kann der Waschmaschinenmotor(9) je nach Erfordernis angesteuert oder nicht angesteuert sein. Die Zeit der Wasserfüllung ist durch die Stoppdauer des Timermotors(6) bestimmt. Die Stoppdauer kann auch durch einen Sollwert aus dem Speicher(19) bestimmt werden, oder vom Erreichen eines vom Sensor(21) erfaßten Niveau-Wertes abhängig sein. Es ist damit möglich, bei einer Schaumbildung in der Wäschetrommel entsprechend mehr Wasser für den folgenden Waschvorgang einzulassen.

Anschließend folgt in den Schaltschritten 2 bis 24 ein beschriebener Waschvorgang, beispielsweise der Waschvorgang nach Spalte V. Die Programmschrittzeit(P) beträgt im Falle der Spalte X 225 s und im Falle der Spalte XI 252,5 s.

Es ist auch möglich, mit der beschriebenen Einrichtung die Thermostopfunktion hinsichtlich des Bauaufwandes zu vereinfachen. Über einen Schaltkontakt Schaltkontakt(14,15) der Programmtrommel(3) wird dann die Heizung geschaltet. Die Programmschrittzeit(P) bzw. die innerhalb ihr liegenden Stoppdauern in den Schaltschritten 1 bis 24 der Reversiertrommel(4) werden dann so gewählt, daß sich die Temperatur schrittweise der Solltemperatur nähert. Nach Ablauf der Programmschrittzeit(P) ist dann die Solltemperatur erreicht und die Programmtrommel(3) schaltet in einen Programmschritt weiter, bei dem nicht mehr weitergeheizt wird. Es ist auch möglich, mittels eines Temperaturfühlers den zeitlichen Temperaturgradienten beim Aufheizen, während einer Zyklussummendauer mehrmals, zu erfassen und dann die Stoppdauern der einzelnen Folgenden Schaltschritte der Reversiertrommel(4) so zu wählen, daß am Ende der Zyklussummendauer die Solltemperatur erreicht ist.

Eine günstige Möglichkeit zur Verwirklichung einer Thermostoppfunktion besteht in Folgendem:

Die Programmschrittzeit(P) bzw. die innerhalb ihr liegenden Stoppdauern in den Schaltschritten(1 bis 24) werden so gewählt, daß in jedem Einsatzfall die Solltemperatur der Waschlauge innerhalb der Programmschrittzeit(P) erreicht werden kann. In der Praxis wird dann im Einzelfall die Solltemperatur erreicht, bevor die Programmschrittzeit(P) abgelaufen ist. Nach Überschreiten der Solltemperatur schaltet die Steuerelektronik(2) dann einen Waschgang mit sehr kurzen Stoppzeiten (vgl. IIX in Fig. 2) ein, so daß die noch nicht abgearbeiteten Reversierschritte möglichst schnell abgearbeitet werden. Die Heizung arbeitet dadurch zwar noch weiter. Da die nach Erreichen der Solltemperatur restlichen Reversierschritte jedoch schnell durchlaufen werden, ist das Weiterheizen praktisch unbedeutend. Nach dem letzten, 24. Schaltschritt wird dann die Programmtrommel weitergeschaltet und die Heizung abgeschaltet. Im nächsten Programmschritt wird nicht geheizt.

Mittels der Wahlschalter(22) lassen sich bestimmte Optionen vom Benutzer vorwählen. Beispielsweise kann mittels eines Wahlschalters(22) ein Waschvorgang gezielt verlängert werden. Entsprechend der Stellung des Wahlschalters(22) verlängert dann die Steuerelektronik(2) über den Triac(20) die Stoppdauern der Reversiertrommel (4) in den einzelnen Schaltschritten.

Die beschriebene Einrichtung kann auch eine Triac-Kurzschluß-Sicherungsfunktion aufweisen. Läuft der Waschmaschinenmotor(9) wegen eines Kurzschlusses des Triacs (10) auf eine unerwünscht hohe Drehzahl hoch, dann erkennt dies die Steuerelektronik(2) über den betreffenden Sensor(21) (Tachogenerator). Die Steuerelektronik(2) läßt dann den Timermotor(6) sofort für einen Schaltschritt anlaufen. Die Wendekontakte(7,8) gehen dadurch in die Stillstandsposition. Der Waschmaschinenmotor kann somit trotz Kurzschlusses des Triacs(10) nicht weiterlaufen.

Bei den beschriebenen Ausführungsbeispielen sind in den Waschgängen die Rechtslaufzeiten und die Linkslaufzeiten gleich lang. Es ist jedoch im Bedarfsfall ohne weiteres möglich, unterschiedliche Rechtslauf- und Linkslaufzeiten zu wählen.

## Patentansprüche

1. Hybrid-Steuereinrichtung, die ein elektromechanisches Programmschaltwerk mit Programmtrommel, Reversiertrommel und einem diese antreibenden Timermotor sowie eine Steuerelektronik mit Speicher aufweist, wobei
die Reversiertrommel(4) so ausgestattet ist, daß sie in ihren Schaltschritten mehrmals zyklisch nacheinander Wendekontakte(7,8) eines Wäschetrommelmotors(9) zumindest auf die Zyklusfunktionen: Rechtslauf(R), Stillstand(S), Linkslauf(L), Stillstand(S) schaltet und die Reversiertrommel (4) für die im jeweiligen Programm-Steuerbefehl vorgegebene Dauer der Zyklusfunktionen stoppt, dadurch gekennzeichnet,
daß die Steuerelektronik (2) von der Programmtrommel (3) jeweils einen Kodierten Programm-Steuerbefehl erhält, und daß der Speicher (19) der Steuerelektronik(2) die jedem Programm-Steuerbefehl zugeordneten Stoppdauern für die Zyklusfunktionen(R,S,L,S) enthält, wobei ein vom Timermotor(6) angetriebener Schrittschaltantriebl5) derart gestaltet ist, daß er nach jeder Stoppdauer die Reversiertrommel(4) weiterschaltet und nach mehrmaligem Durchlauf der Zyklusfunktionen die Programmtrommel(3) um einen Programmschritt weiterschaltet.

2. Steuereinrichtung nach Anspruch 1 oder 2,
dadurch gekennzeichnet,
daß die Schaltschrittzeiten der Reversiertrommel(4) gleich kurz sind.

3. Steuereinrichtung nach einem der vorhergehenden Ansprüche,
dadurch gekennzeichnet,
daß die Programmtrommel(3) jeweils um einen Programmschritt weiterschaltet, wenn die Zyklusfunktionen (R,S,L,S) etwa sechsmal durchlaufen sind.

4. Steuereinrichtung nach einem der vorhergehenden Ansprüche,
dadurch gekennzeichnet,
daß für Rechtslauf(R) und für Linkslauf(L) und/oder für Stillstand(S) der Reversiertrommel(4) unterschiedlich lange Stoppdauern vorgesehen sind.

5. Steuereinrichtung nach einem der vorhergehenden Ansprüche,
dadurch gekennzeichnet,
daß die Reversiertrommel(4) zusätzlich Aggregate(11) der Waschmaschine, wenigstens Wassereinlaßventil, Wasserpumpe, steuert und mittels der von der Steuerelektronik (2) bestimmten Stoppdauern die Einschaltdauer der Aggregate bestimmt ist.

6. Steuereinrichtung nach einem der vorhergehenden Ansprüche,
dadurch gekennzeichnet,
daß an der Steuerelektronik(2) ein oder mehrere Zustandssensoren(21) liegen, die einen oder mehrere Zustände des Programmablaufs, nämlich Temperatur und/oder Füllstand und/oder Drehzahl und/oder Schaumbildung, erfassen, und daß die Steuerelektronik(2) die Stoppdauern in Abhängigkeit von den Meßwerten der Zustandssensoren(21) einstellt.

7. Steuereinrichtung nach einem der vorhergehenden Ansprüche,
dadurch gekennzeichnet,
daß an der Steuerelektronik(2) ein oder mehrere Wahlschalter(22) liegen, mit denen ein oder mehrere Parameter einschaltbar sind, wobei die Steuerelektronik (2) die Stoppdauern in Abhängigkeit von der Stellung des Wahlschalters(22) einstellt.

8. Steuereinrichtung nach einem der vorhergehenden Ansprüche,
dadurch gekennzeichnet,
daß in wenigstens einem Programmschritt der Programmtrommel(3) während der Zyklussummendauer der Reversiertrommel(4) die Heizung eingeschaltet ist und die Stoppdauern von der Steuerelektronik(2) so bemessen sind, daß am Ende des letzten Zyklusses die Solltemperatur erreicht ist und die Programmtrommel(3) dann in den nächsten Programmschritt weiterschaltet.

9. Steuereinrichtung nach einem der vorhergehenden Ansprüche 1 bis 7,
dadurch gekennzeichnet,
daß in wenigstens einem Programmschritt der Programmtrommel(3) die Programmschrittzeit(P) so gewählt ist, daß bei eingeschalteter Heizung die Solltemperatur in jedem Fall erreichbar ist, und daß im jeweiligen Heizungsfall die Steuerelektronik(2) nach Erreichen der Solltemperatur bis zum Ende der Programmschrittzeit auf sehr kurze Stoppdauern umschaltet, um die Heizung abzuschalten.

10. Steuereinrichtung nach einem der vorhergehenden Ansprüche,
dadurch gekennzeichnet,
daß der Wäschetrommelmotor(9) von einem elektronischen Schalter(10) gesteuert ist und daß eine oder mehrere der Zyklusfunktionen(R,S,L,S) dadurch wirkungslos gemacht werden, daß der elektronische Schalter(10) von der Steuerelektronik(2) gesteuert gesperrt wird.

11. Steuereinrichtung nach Anspruch 10,
dadurch gekennzeichnet,
daß ein Tachogenerator(21) die Drehzahl des Wäschetrommelmotors(9) erfaßt, und die Steuerelektronik (2) bei einem unerwünschten Ansteigen der Drehzahl die Reversiertrommel(4) über den Timermotor(6) in die nächste Stillstandsfunktion stellt.

12. Steuereinrichtung nach einem der vorhergehenden Ansprüche,
dadurch gekennzeichnet,
daß die Steuerelektronik(2) die Reversiertrommel(4) dadurch stoppt, daß sie den Timermotor(6) stoppt.

## Claims

1. Hybrid control, which has an electromechanical program switching device with a programming drum, reversing drum, and a timer motor driving the same, as well as an electronic control with a store, wherein the reversing drum (4) is so equipped that it switches in their switching steps more than once in a consecutive cyclic manner turning contacts (7, 8) of a laundry drum motor (9) at least to the cycle functions; right-hand running ( R), standstill (S), left-hand running (L), standstill (S), and the reversing drum (4) stops for the duration of the cycle functions specified in the respective program control command, characterised in that the electronic control (2) receives from the programming drum (3) respectively a coded program control command and in that the store (19) of the electronic control (2) comprises the stop durations associated with each program control command for the cycle functions (R, S, L, S), wherein a step switching drive (15) driven by a timer motor (6) is so configured that after each stop duration it switches the reversing drum further, and after the cycle functions have been run through a plurality of times it switches the programming drum (3) further by one program step.

2. Control according to claim 1 or 2, characterised in that the switching step times of the reversing drum (4) are equally short.

3. Control according to one of the preceding claims, characterised in that the programming drum (3) switches further by one program step when the cycle functions (R, S, L, S) have been run through about six times.

4. Control according to one of the preceding claims, characterised in that for right-hand running ( R) and for left-hand running (L) and/or for standstill (S) of the reversing drum (4), stop durations of different lengths are provided.

5. Control according to one of the preceding claims, characterised in that the reversing drum (4) in addition controls aggregates (11) of the washing machine, at least water inlet valve, water pump, and by means of the stop durations determined by the electronic control (2) the switch-on duration of'the aggregates is determined.

6. Control according to one of the preceding claims, characterised in that lying on the electronic control (2) are one or more condition sensors (21), which determine one or more conditions of the program running, in particular temperature and/or filling level and/or speed and/or lather formation, and in that the electronic control (2) sets the stop durations as a function of the measured values of the condition sensors (21).

7. Control according to one of the preceding claims, characterised in that on the electronic control (2) one or more selection switches (22) lie, with which one or more parameters can be switched on, in which case the electronic control (2) sets the stop durations as a function of the position of the selection switch (22).

8. Control according to one of the preceding claims, characterised in that in at least one program step of the programming drum (3) throughout the cycle duration of the reversing drum (4) the heating is switched on and the stop durations of the electronic control (2) are so dimensioned that at the end of the last cycle the reference temperature is reached and the programming drum (3) then switches further into the next program step.

9. Control according to one of the preceding claims 1 to 7, characterised in that in at least one program step ofthe programming drum (3) the program step time (P) is so selected that with the heating switched on the reference temperature is achievable in any case, and in that in the respective heating case the electronic control (2), after reaching of the reference temperature, switches over to very short stop durations until end of the program step time in order to switch off the heating.

10. Control according to one of the preceding claims, characterised in that the laundry drum motor (9) is controlled by an electronic switch (10) and in that one or more of the cycle functions (R, S, L, S) are made ineffective by the locking of the electronic switch (10) by the electronic control (2).

11. Control according to claim 10, characterised in that a tachogenerator (21) detects the speed of the laundry drum motor (9), and the electronic control (2), in the event of unwanted increase in the speed sets the reversing drum (4) via the timer motor (6) into the next standstill function.

12. Control according to one of the preceding claims, characterised in that the electronic control (2) stops the reversing drum (4) by stopping the timer motor (6).

## Revendications

1. Dispositif de commande hybride, qui présente un programmateur électromécanique avec un tambour programme, un tambour réversible et un moteur de synchronisation entraînant ceux-ci ainsi qu'une électronique de commande avec une mémoire, où le tambour réversible (4) est réalisé de telle sorte qu'il commute, dans leurs pas de commutation, plusieurs fois cycliquement les uns après les autres des contacts de renversement (7, 8) d'un moteur de tambour à linge (9) au moins aux fonctions de cycle : marche à droite (R), arrêt (S), marche à gauche (L), arrêt (S) et arrête le tambour réversible (4) pendant la durée des fonctions de cycle prédéterminées dans l'instruction de commande respective du programme, caractérisé en ce que l'électronique de commande (2) reçoit du tambour programme (3) respectivement une instruction de commande de programme codée et que la mémoire (19) de l'électronique de commande (2) contient les durées d'arrêt, associées à chaque instruction de commande de programme, pour les fonctions de cycle (R, S, L, S), où un entraînement pas-à-pas (15) entraîné par le moteur de synchronisation (6) est réalisé de telle sorte qu'il commute après chaque durée d'arrêt le tambour réversible (4) et qu'il commute après l'exécution réalisée plusieurs fois des fonctions de cycle le tambour programme (3) d'un pas de programme.

2. Dispositif de commande selon la revendication 1 ou 2, caractérisé en ce que les durées de pas de commutation du tambour réversible (4) sont de la même brièveté.

3. Dispositif de commande selon l'une des revendication précédentes, caractérisé en ce que le tambour programme (3) commute respectivement d'un pas de programme lorsque les fonctions de cycle (R, S, L, S) ont été exécutées environ six fois.

4. Dispositif de commande selon l'une des revendications précédentes, caractérisé en ce que sont prévus pour la marche à droite (R) et pour la marche à gauche (L) et/ou pour l'arrêt (S) du tambour réversible (4) des durées d'arrêt de longueurs différentes.

5. Dispositif de commande selon l'une des revendications précédentes, caractérisé en ce que le tambour réversible (4) commande de plus des appareils (11) de la machine à laver, au moins une vanne d'entrée d'eau, une pompe à eau, et que par les durées d'arrêt définies par l'électronique de commande (2), la durée en service des appareils est déterminée.

6. Dispositif de commande selon l'une des revendications précédentes, caractérisé en ce que s'appliquent à l'électronique de commande (2) un ou plusieurs capteurs d'état (21) qui détectent un ou plusieurs états du déroulement du programme, à savoir la température et/ou le niveau de remplissage et/ou la vitesse de rotation et/ou la formation de la mousse, et en ce que l'électronique de commande (2) règle les durées d'arrêt en fonction des valeurs de mesure des capteurs d'état (21).

7. Dispositif de commande selon l'une des revendications précédentes, caractérisé en ce que s'appliquent à l'électronique de commande (2) un ou plusieurs commutateurs de sélection (22) au moyen desquels un ou plusieurs paramètres peuvent être réglés, où l'électronique de commande (2) règle les durées d'arrêt en fonction de la position du commutateur de sélection (22).

8. Dispositif de commande selon l'une des revendications précédentes, caractérisé en ce qu'au moins pendant un pas de programme du tambour programme (3), pendant la durée de la somme des cycles du tambour réversible (4), le chauffage fonctionne et que les durées d'arrêt sont déterminées par l'électronique de commande (2) de telle sorte qu'à la fin du dernier cycle, la température de consigne est atteinte et que le tambour programme (3) commute alors au prochain pas de programme.

9. Dispositif de commande selon l'une des revendications 1 à 7, caractérisé en ce qu'au moins dans un pas de programme du tambour programme (3), la durée de pas de programme (P) est sélectionnée de façon que lorsque le chauffage est en marche, la température de consigne peut être atteinte dans tous les cas, et que dans le cas de chauffage respectif, l'électronique de commande (2) après l'atteinte de la température de consigne jusqu'à la fin de la durée de pas de programme, commute à des durées d'arrêt très courtes pour arrêter le chauffage.

10. Dispositif de commande selon l'une des revendications précédentes, caractérisé en ce que le moteur (9) du tambour à linge est commandé par un commutateur électronique (10), et qu'une ou plusieurs fonctions de cycle (R, S, L, S) sont rendues sans effet en ce que le commutateur électronique (10) est bloqué en étant commandé par l'électronique de commande (2).

11. Dispositif de commande selon la revendication 10, caractérisé en ce qu'un générateur tachymétrique (21) détecte la vitesse de rotation du moteur (9) du tambour à linge, et que l'électronique de commande (2), lors d'une montée non souhaitée de la vitesse de rotation, amène le tambour réversible (4) par le moteur de synchronisation (6) dans la prochaine fonction d'arrêt.

12. Dispositif de commande selon l'une des revendications précédentes, caractérisé en ce que l'électronique de commande (2) arrête le tambour réversible (4) par le fait qu'elle arrête le moteur de synchronisation (6)
